Europäisches Patentamt

European Patent Office

Office européen des brevets

(11) Publication number: **0 423 499 B1**

# EUROPEAN PATENT SPECIFICATION

(45) Date of publication of patent specification: **07.12.94**

(51) Int. Cl.[5]: **B05D 3/06**, C08J 7/18, B29C 59/16

(21) Application number: **90118060.4**

(22) Date of filing: **19.09.90**

(54) **Process for improving the adhesiveness of the surface of articles of polymeric material and articles obtained thereby.**

(30) Priority: **20.09.89 IT 2176489**

(43) Date of publication of application:
**24.04.91 Bulletin 91/17**

(45) Publication of the grant of the patent:
**07.12.94 Bulletin 94/49**

(84) Designated Contracting States:
**AT BE CH DE DK ES FR GB GR LI NL SE**

(56) References cited:
**EP-A- 0 206 145**
**US-A- 4 861 408**

**MACHINE DESIGN, vol. 53, no. 25, November
1981, page 136; DRD: "Ion beamimproves
adhesive bonds"**

(73) Proprietor: **ENICHEM S.p.A.**
**Piazza Repubblica, 16**
**I-20124 Milano (IT)**

(72) Inventor: **Occhiello, Ernesto, Dr.**
**13, C.so Cavallotti**
**I-28100 Novara (IT)**
Inventor: **Morra, Marco**
**23, Via San Martino**
**I-14040 Cortiglione-Asti (IT)**
Inventor: **Garbassi, Fabio, Dr.**
**6, Via C. Porta**
**I-28100 Novara (IT)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

## Description

The present invention relates to a process for improving the adhesiveness of the surface of articles (bodies) fabricated from polymeric material which is capable of crosslinking when irradiated.

More particularly, the present invention relates to a process for improving the adhesiveness of the surface of articles of said polymeric material for adhesive polymeric films or layers, such as, e.g., acrylic, epoxy or polyurethane adhesives, or for paints, varnishes, inks.

Most of the methods commonly used in order to improve the wettability and adhesiveness of polymeric surfaces are described in a monography published by S. Wu ("Polymer Interface and Adhesion"; Marcel Dekker Publisher; New York 1982), in which reference is made to chemical and physical treatments.

The chemical treatments comprise the chemical attack of the surface with solutions which, depending on the type of the treated polymer, can be acidic, basic and/or oxidizing. However, this type of treatment requires the use of aggressive liquids which are potentially dangerous and toxic for the operators and the work premises, with the further drawback that after having been used, the exhausted chemicals have to be disposed of.

Another very widely used chemical method, e.g., above all for improving paintability, consists in the application of a primer. A primer is a substance which gives rise to an intermediate layer between a polymer and the paint (or the adhesive), which intermediate layer optimizes the mutual interaction of the two adherends. The main disadvantage thereof is the need of applying a very thin layer, with a predetermined thickness; furthermore, the use of toxic solvents is required frequently.

Among the physical methods, the most frequently used are flame treatment, corona discharge treatment and low-pressure plasma treatment. In the first two cases, the disadvantages are above all due to the difficulties encountered when a uniform treatment on fabricated parts of complex shape is to be obtained, whilst in the case of the treatments with corona discharge and low-pressure plasma, a limited effectiveness and a fast decay over time can be observed.

Another method known from the prior art in order to improve the adhesive strength of coatings to polymers is the treatment with electron beams.

The use of electron beams is described in "Crosslinking with Radiation", Encyclopedia of Polymer Science and Technology (Wiley, New York, 1986).

US-A-4,543,268 and 4,533,566 disclose the improvement of the adhesion of coatings on poly(ethylene terephthalate) (PET) based films by treatment with electron beams of an energy higher than 150 keV under an oxygen-controlled atmosphere (more than 40 ppm).

GB-A-1,277,674 and 1,264,579 disclose the crosslinking of paints based on polyester and acrylic resins on polyethylene, with an improvement in the adhesion strength being simultaneously achieved by means of the use of electron beams with an energy higher than 100 keV.

Finally, US-A-2,955,953 discloses the improvement in adhesion by means of irradiation of the polymeric material, in the absence of oxygen, with electrons having an energy of 15 to 50 keV.

All of the above processes suffer from the drawback that they use high-energy electron beams. This results in two unfavourable effects. The first negative effect is that X-rays are generated, with the consequent need to protect the operators therefrom which in turn increases the operating costs. The second drawback is that not only the surface of the polymer is modified, but also underlying polymer layers are affected, with the thickness of the latter being the higher the higher the energy of the incident electrons is.

US-A-4 861 408 describes treating thin polymer surfaces, e.g., Teflon®, with electron radiation of 0.1 to 1 keV in a vacuum of less than $10^{-6}$ Torr to enhance the ability of the surface to be adhered to a variety of substrates.

There has now been found a process for improving the adhesiveness of the surface of polymeric materials which, although also using electron beams for irradiating said surface, makes it possible to avoid or at least considerably reduce the above drawbacks.

Therefore, subject matter of the instant invention is a process for improving the adhesiveness of the surface of articles made of polymeric material which is capable of crosslinking when irradiated, comprising placing the article in a vacuum chamber and irradiating said surface with an electron beam having an energy not higher than 5 keV, in the presence of a partial pressure of oxygen within the range of from 0.2 to 2 mPa.

According to a preferred embodiment, the process according to the present invention comprises irradiating said surface with electron beams of an energy ranging from 0.1 to 5 keV and, particularly, from 0.2 to 2 keV.

The amount of energy emitted per irradiated surface area unit depends exclusively on the type of treated polymer. However, amounts of energy of from 0.1 to 1.5 $J/cm^2$ are those which are most commonly used.

The irradiation time is a function of the characteristic current intensity of the electron beam, but in any case should be such as to supply the irradiated surface with the above amount of energy.

The polymeric material used in the process of the present invention is selected from polymers which crosslink when irradiated, and are described in "Crosslinking with Radiation", Encyclopaedia of Polymer Science and Technology, 1986. Examples of such polymers are high-density, medium-density and low-density polyethylene, copolymers of ethylene and propylene and/or butenes, polystyrene, impact-resistant polystyrene, styrene copolymers such as styrene-acrylonitrile resins (SAN), imidized styrene-maleic anhydride resins (SMA), acrylonitrile-butadiene-styrene resins (ABS), etc.; polyesters such as poly(ethylene terephthalate), poly(butylene-terephthalate), thermotropic liquid crystals such as poly(1-phenylethyl-1,4-phenylene-phenyl-1,4-phenylene)-terephthalate, polyacrylates, such as polymethylmethacrylate and polyethylacrylate.

A first advantage of the present process is that the electron beam only affects the surface of the irradiated article and, if at all, layers of very limited thickness lying under said external surface.

In fact, at energies of, e.g., 0.2 to 2 keV, the mean free path of the electrons, as reported in a paper by M.P. Seah and W.A. Dench published in "Surface and Interface Analysis" (Volume 1, page 2, 1979) ranges from 1 to 10 nm. As a consequence, the thermomechanical properties of the whole fabricated part remain completely unchanged.

Another advantage of the present invention is that according to the instant process, it is no longer necessary to limit the concentration of oxygen inside the treatment chamber to values which are as low as possible, as taught by the relevant technical literature (US-A-2,955,953), inasmuch as sufficiently high amounts of oxygen, associated with low-energy electron beams, make it possible to control the surface crosslinking reactions.

A further advantage of the process according to the present invention is that it may be carried out on the fabricated polymer part before the coating (e.g., a paint or adhesive layer) is applied to it, in contrast to what is described in the technical literature, e.g., in "Electron Beam Curing of Polymers" (SRI, Menlo Park, 1985) or in GB-A-1,277,674 and 1,264,579.

Furthermore, the effect of the treatment persists over time and at room temperature, whilst when the treatments known from the prior art (US-A-2,955,953) are used, it is recommended that the time elapsing between the treatment and the coating is not longer than five minutes, unless the irradiated part is stored under an inert atmosphere or at a temperature lower than -80°C.

Finally, as reported, e.g., in the paper by G.A. Senich and R.E. Florin in "Journal of Macromolecular Science - Reviews in Macromolecular Chemistry and Physics", Vol. C24, page 239 (1984), inasmuch as the collisions of high-energy electrons generate very hard X-rays, a good shelter should be provided in order to safeguard the operators. At the energy levels used in the process according to the present invention, such precautions are not necessary.

The products obtained by means of the process according to the present invention may be used with particularly advantageous results in the fields of transportation, electrical appliances for household use, cars, telecommunications and business machines, in order to produce doors, covers, decks, cases, panels.

Another, very useful application is in packaging films, in which the adhesion to other polymeric layers, and the printability are enhanced.

The following examples are to illustrate the present invention without being a limitation of the scope thereof.

In all examples a device was used, which comprised a vacuum chamber having an inner diameter of about 40 cm and a height of about 30 cm. The evacuation of the inner chamber of the reactor was secured by a pumping device capable of reaching pressures of the order of $10^{-6}$ Pa. To the vacuum chamber an electronic gun (EGG 3H manufactured by Kimball Physics Inc. of Wilton, New Hampshire) was applied, which gun was capable of emitting electrons with energies within the range of from 0.1 to 10 keV, with a current intensity of up to 50 mA. The electrons were emitted with uniform concentration to impinge onto a circular area (radius: 10 cm). The specimen, in the instant case small polymer slabs, were arranged perpendicularly to the electron gun.

In the case of polymeric film the treatment can be carried out continuously. A schematic description of an equipment for the treatment of films with electron beams can be found in US-A-4,533,566.

3

Example 1

Slabs (6 x 6 x 0.3 cm) produced by injection moulding from high-density polyethylene ERACLENE® QG 6015 (produced by ENICHEM, Milan) were irradiated by using the above equipment, with the total inner pressure being kept at $5 \times 10^{-3}$ Pa (partial pressure of oxygen = about $10^{-3}$ Pa).

The adhesiveness was measured by means of two methods.

The first method consisted of a test for the determination of tensile strength, carried out by first causing an aluminum punch to adhere to the polymeric surface by means of an epoxy adhesive. The instrument used in order to carry out the measurement is marketed under the name "Sebastian II" by Quad Group of Lewis-Spokane (Washington), which also supplied the aluminum punches coated with epoxy resin, capable of withstanding tensile stresses of up to 68.7 MPa (700 kg/cm$^2$).

The second method consisted in subjecting the specimen of polyethylene, treated and bonded, to shear stress. The adhesive junctures were prepared according to ASTM D 1002-72, using a commercially available epoxy adhesive (E11 manufactured by Permabond of Bridgewater, New Jersey) and were crosslinked for one hour at 90°C, as recommended by the manufacturer of the adhesive. The shear stress was applied by using a TMSM model electromechanical dynamometer manufactured by Instron according to the conditions called for by ASTM D 1002-72.

In Table 1, the experimental parameters of the treatment and the obtained results in terms of adhesiveness are reported.

It can be seen that with energy amounts of more than 1.5 J/cm$^2$ further increases in tensile strength are not obtained. The obtained values may be compared to the tensile strength values of high-density polyethylene, which range from 26.5 to 32.4 MPa (270 to 330 kg/cm$^2$), as reported in Encyclopedia of Modern Plastics (McGraw-Hill, New York, 1988), page 537. Therefore, in order to cause breakage of the adhesive-bonded juncture, a stress close to the tensile strength of high-density polyethylene is necessary, a result which indicates that a breakage of the cohesive type occurs in the interior of the material.

Table 1

| Energy of electrons (eV) | Current intensity of electron beam (mA) | Treatment time (seconds) | Energy supplied per unit surface area (J/cm²) | Tensile strength, MPa (kg/cm²) | Shear strength (N/mm²) |
|---|---|---|---|---|---|
| 200 | 2 | 60 | 0.3 | 4.34 (44.2) | |
| 200 | 2 | 300 | 1.5 | 17.79 (181.3) | 1.03 |
| 200 | 2 | 1,200 | 6.1 | 17.79 (181.3) | |
| 1,000 | 10 | 30 | 3.8 | 16.26 (165.7) | |
| 1,000 | 10 | 60 | 7.6 | 17.83 (181.8) | |
| 1,000 | 2 | 30 | 0.8 | 11.58 (118.0) | |
| 1,000 | 20 | 30 | 7.6 | 17.90 (182.5) | 1.46 |
| 0 | 0 | | | 0 (0) | 0.43 |

In Table 2 the results which were obtained when the total pressure inside the irradiation chamber was lowered to $1 \times 10^{-4}$ Pa (partial pressure of oxygen $2 \times 10^{-5}$ Pa) are reported. As one can see, the tensile strength values are much lower, which shows that the control of the crosslinking by the oxygen contained inside the chamber is important for the tensile strength of the bonded juncture.

5

Table 2

| Energy of Electrons (eV) | Current intensity of Electron beam (mA) | Treatment time (seconds) | Energy supplied per unit surface area (J/cm$^2$) | Tensile strength, MPa (kg/cm$^2$) |
|---|---|---|---|---|
| 200 | 2 | 300 | 1.5 | 6.58 (67.1) |
| 1,000 | 10 | 30 | 3.8 | 7.21 (73.5) |

Finally, in Table 3 the data relevant to the ageing in air at room temperature is reported. A decay of adhesiveness with ageing does not occur.

Table 3

| Energy of electrons (eV) | Current intensity of electron beam (mA) | Treatment time (seconds) | Energy supplied per unit surface area (J/cm²) | Tensile strength, $M_\alpha$ (kg/cm²) | Ageing time (days) |
|---|---|---|---|---|---|
| 1,000 | 10 | 30 | 3.8 | 16.24 (165.7) | 0 |
| 1,000 | 10 | 30 | 3.8 | 15.70 (160.0) | 2 |
| 1,000 | 10 | 30 | 3.8 | 16.00 (163.0) | 7 |

Example 2

Slabs produced by injection moulding (6 x 6 x 0.3 cm) from polystyrene homopolymer (EDISTIR® N-1670 manufactured by Montedipe of Milan) were irradiated by using the above equipment, with the total pressure inside the irradiation chamber being kept at 5 x $10^{-3}$ Pa.

The adhesiveness was determined by means of the test for tensile strength determination described above.

From the data shown in Table 4 it can be taken that a substantial improvement in adhesiveness was obtained after the treatment.

Table 4

| Energy of electrons (eV) | Current intensity of electron beam (mA) | Treatment time (seconds) | Energy supplied per unit surface area (J/cm$^2$) | Tensile strength, MPa (kg/cm$^2$) |
|---|---|---|---|---|
| 1,000 0 | 20 | 30 | 7.6 | 16.09 (164.0) 0 (0) |

Example 3

Slabs produced by injection moulding (6 x 6 x 0.3 cm) from poly(ethylene terephthalate) (PET) (MEF 0.78 manufactured by Montefibre of Milan) were irradiated by using the above equipment, with the total pressure inside the irradiation chamber being kept at 5 x $10^{-3}$ Pa.

The adhesiveness was determined by means of the above test for tensile strength determination.

As one can clearly see from the data shown in Table 5, after the treatment a substantial improvement in adhesiveness was obtained also in the case of PET.

Table 5

| Energy of electrons (eV) | Current intensity of electron beam (mA) | Treatment time (seconds) | Energy supplied per unit surface area (J/cm$^2$) | Tensile strength, MPa (kg/cm$^2$) |
|---|---|---|---|---|
| 1,000 0 | 20 | 30 | 7.6 | 15.94 (162.5) 4.39 (44.7) |

**Claims**

1. Process for improving the adhesiveness of the surface of articles made of polymeric material which is capable of crosslinking when irradiated, comprising placing the article in a vacuum chamber and irradiating said surface with an electron beam of an energy not higher than 5 keV in the presence of oxygen at a partial pressure of from 0.2 to 2 mPa.

2. Process according to claim 1, wherein the electron beam has an energy of from 0.1 to 5 keV.

3. Process according to claim 2, wherein the electron beam has an energy of from 0.2 to 2 keV.

4. Process according to any one of the preceding claims, wherein the amount of energy emitted per unit of irradiated surface area is from 0.1 to 1.5 J/cm$^2$.

5. Use of the articles obtainable according to the process of any one of claims 1 to 4 for manufacturing films, doors, covers, decks, cases, panels for use in the fields of transportation, electrical appliances for household use, cars, telecommunications, business machines and packaging.

**Patentansprüche**

1. Verfahren zur Verbesserung der Oberflächenhaftung von aus polymerem Material, das bei Bestrahlung vernetzen kann, hergestellten Gegenständen, umfassend das Einbringen des Gegenstandes in eine Vakuumkammer und die Bestrahlung der Oberfläche mit einem Elektronenstrahl mit einer Energie, die nicht höher als 5 keV ist, in der Anwesenheit von Sauerstoff bei einem Partialdruck von 0,2 bis 2 mPa.

2. Verfahren nach Anspruch 1, bei welchem der Elektronenstrahl eine Energie von 0,1 bis 5 keV hat.

3. Verfahren nach Anspruch 2, bei welchem der Elektronenstrahl eine Energie von 0,2 bis 2 keV hat.

4. Verfahren nach irgendeinem der vorangehenden Ansprüche, bei welchem die abgestrahlte Energiemenge pro Einheit bestrahlter Oberfläche 0,1 bis 1,5 J/cm$^2$ ist.

5. Verwendung der gemäß dem Verfahren nach irgendeinem der Ansprüche 1 bis 4 erhältlichen Gegenstände zur Herstellung von Folien, Türen, Abdeckungen, Decken, Behältnissen, Platten zur Verwendung in den Gebieten des Transports, der elektrischen Haushaltsgeräte, der Autos, der Telekommunikation, der Büromaschinen und der Verpackung.

**Revendications**

1. Procédé d'amélioration de l'adhésivité de la surface d'articles fabriqués en matériau polymère que l'on peut réticuler par irradiation, comprenant le placement de l'article dans une enceinte sous vide et l'irradiation de cette surface par un faisceau d'électrons à une énergie qui ne dépasse pas 5 keV en présence d'oxygène à une pression partielle de 0,2 à 2 mPa.

2. Procédé selon la revendication 1 dans lequel le faisceau d'électrons à une énergie de 0,1 à 5 keV.

3. Procédé selon la revendication 1 dans lequel le faisceau d'électrons à une énergie de 0,2 à 2 keV.

4. Procédé selon l'une quelconque des revendications précédentes dans lequel la quantité d'énergie émise par unité de surface irradiée est de 0,1 à 1,5 J/cm$^2$.

5. Utilisation des articles que l'on peut obtenir par le procédé selon l'une quelconque des revendications 1 à 4 pour fabriquer des films, des portes, des couvercles et couvertures, des plaques, des boîtiers, des panneaux à utiliser dans le domaine du transport, de l'électroménager, de l'industrie automobile, des télécommunications, des machines de bureau et de l'emballage.